# EUROPEAN PATENT APPLICATION

(11) **EP 4 475 267 A1**
(43) Date of publication of application: **11.12.2024**
(21) Application number: 24162184.6
(22) Date of filing: 07.03.2024
(51) Int. Cl.: H01M 10/42, H01M 4/66, H01M 4/62, H01M 4/525, H01M 4/131, H01M 10/052, H01M 10/0525

(54) **ELECTRODE CURRENT COLLECTOR FOR RECHARGEABLE LITHIUM BATTERY, ELECTRODE, AND RECHARGEABLE LITHIUM BATTERY INCLUDING SAME**

(30) Priority: 09.06.2023 KR 20230074177
(71) Applicant: Samsung SDI Co., Ltd., Yongin-si, Gyeonggi-do 17084 (KR); IUCF-HYU (INDUSTRY-UNIVERSITY COOPERATION FOUNDATION HANYANG UNIVERSITY), Seoul 04763 (KR)
(72) Inventor: KIL, Ki Chun, 17084 Yongin-si (KR); CHO, Chaewoong, 17084 Yongin-si (KR); HA, Jaehwan, 17084 Yongin-si (KR); PARK, Keemin, 04762 Seoul (KR); SONG, Taeseup, 03180 Seoul (KR); PAIK, Ungyu, 06289 Seoul (KR); MYEONG, Seungcheol, 04761 Seoul (KR)
(74) Representative: Marks & Clerk LLP

(57) **Abstract**

A current collector for a rechargeable lithium battery according to an embodiment includes a substrate; and a functional layer on the substrate, wherein the functional layer includes a flame retardant, a conductive material, and a binder.

## Description

### BACKGROUND

### 1. Field

A current collector for a rechargeable lithium battery, an electrode including the same, and a rechargeable lithium battery are disclosed.

### 2. Description of the Related Art

Recently, with the rapid spread of electronic devices using batteries such as mobile phones, notebook computers, and electric vehicles, demand for rechargeable batteries having high energy density and high capacity is rapidly increasing. Accordingly, research and development for improving the performance of rechargeable lithium batteries is actively progressing.

A rechargeable lithium battery includes a positive electrode and a negative electrode including an active material capable of intercalating and deintercalating lithium ions, and an electrolyte solution, and electrical energy is produced by oxidation and reduction reactions when lithium ions are intercalated/deintercalated at the positive and negative electrodes.

Recently, with development of small-sized device and middle-to-large-sized rechargeable battery industries, research on positive and negative electrode materials capable of further improving energy density and output characteristics of rechargeable batteries is being actively conducted.

In recent times, high energy density has been realized by replacing LCO (lithium cobalt oxide), a conventionally widely used positive electrode material, with a high nickel (Ni) positive electrode material, which has a problem of deteriorating battery safety due to low thermal safety of the high nickel positive electrode material itself.

Accordingly, a safety functional material is introduced to improve thermal runaway and the safety battery deterioration but has problems of increasing a volume and a weight of the battery and thus deteriorating energy density of the battery and also, deteriorating battery characteristics by generally acting as a resistor.

### SUMMARY

Embodiments are directed to a current collector for a rechargeable lithium battery, including a substrate and a functional layer on the substrate, wherein the functional layer includes a flame retardant, a conductive material, and a binder.

An embodiment may also provide an electrode including a current collector and an electrode active material layer on at least one surface of the current collector, wherein the current collector includes a substrate, and a functional layer between the substrate and the electrode active material layer, and the functional layer includes a flame retardant, a conductive material, and a binder.

Another embodiment provides an electrode and a rechargeable lithium battery including the current collector.

A current collector for a rechargeable lithium battery according to an embodiment includes a substrate; and a functional layer on the substrate, wherein the functional layer includes a flame retardant, a conductive material, and a binder.

An electrode according to another embodiment includes a current collector; and an electrode active material layer on at least one surface of the current collector, wherein the current collector includes a substrate and a functional layer between the substrate and the electrode active material layer, and the functional layer includes a flame retardant, a conductive material, and a binder.

A rechargeable lithium battery according to another embodiment includes a positive electrode; a negative electrode; a separator between the positive electrode and the negative electrode, and an electrolyte solution, wherein the positive electrode, the negative electrode, or both of them are an electrode comprising: a current collector; and an electrode active material layer on at least one surface of the current collector, wherein the current collector includes a substrate and a functional layer between the substrate and the electrode active material layer, and the functional layer includes a flame retardant, a conductive material, and a binder.

At least some of the above and other features of the invention are set out in the claims.

The current collector for a rechargeable lithium battery according to an embodiment may improve safety of a rechargeable battery, improve (*i.e*. prevent) battery deterioration, and minimize a decrease in energy density.

### BRIEF DESCRIPTION OF THE DRAWINGS

Features will become apparent to those of skill in the art by describing in detail embodiments with reference to the attached drawings in which:
FIG. 1 is a schematic view showing an electrode according to an embodiment.
FIGS. 2 to 5 are schematic cross-sectional views of a rechargeable lithium battery according to embodiments.
FIG. 6 is a graph showing the self-extinguishing time (SET) of positive electrodes according to Examples 1 to 4 and Comparative Examples 1 and 2.
FIG. 7 is a graph showing charge/discharge profiles of the rechargeable lithium battery cells according to Examples 1 to 4 and Comparative Examples 1 and 2.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, when specific definition is not otherwise provided, it will be understood that when an element such as a layer, film, region, or substrate is referred to as being "on" another element, it can be directly on the other element or intervening elements may also be present.

Unless otherwise specified in this specification, what is indicated in the singular may also include the plural. In addition, unless otherwise specified, "A or B" may specify "including A, including B, or including A and B".

As used herein, "combination thereof" may refer to a mixture, laminate, composite, copolymer, alloy, blend, reaction product, and the like of the constituents.

As used herein, when a definition is not otherwise provided, a particle diameter may be an average particle diameter. The term "particle diameter" may refer to the average particle diameter (D50). The term "D50" refers to the diameter of particles having a cumulative volume of 50 volume% in the particle size distribution. The average particle size (D50) may be measured by a method well known to those skilled in the art such as, for example, by a particle size analyzer, or by a transmission electron microscopic image, or a scanning electron microscopic image. In some implementations, a dynamic light-scattering measurement device may be used to perform a data analysis, and the number of particles may be counted for each particle size range. From this calculation, the average particle diameter (D50) value may be easily obtained. In some implementations, a particle diameter can be measured using a laser diffraction method. When measuring a particle diameter by the laser diffraction method, more specifically, the particles to be measured may be dispersed in a dispersion medium, and then may be introduced into a commercially available laser diffraction particle diameter measuring device (e.g., Microtrac MT 3000). Ultrasonic waves of about 28 kHz with an output of 60 W may be irradiated to calculate an average particle diameter (D50) on the basis of 50% of the particle diameter distribution in the measuring device.

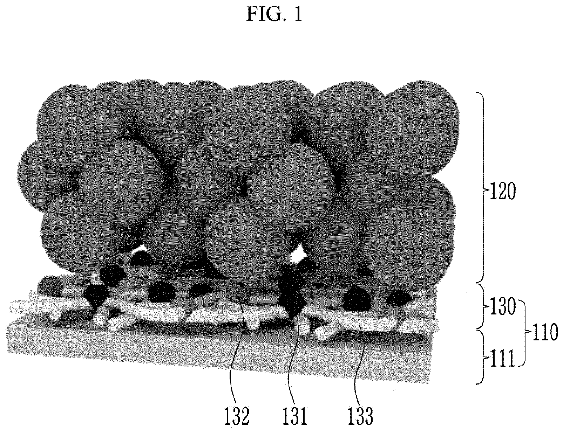

Hereinafter, a current collector for a rechargeable lithium battery according to an embodiment will be described with reference to FIG. 1. FIG. 1 is a schematic view showing an electrode according to an embodiment.

Referring to FIG. 1, an electrode according to an embodiment includes a current collector 110 and an electrode active material layer 120, the electrode active material layer 120 being on at least one surface of the current collector.

### Current Collector

In FIG. 1, the current collector 110 for a rechargeable lithium battery according to an embodiment includes a substrate 111 and a functional layer 130 on the substrate 111, wherein the functional layer 130 includes a flame retardant 131, a conductive material 132, and a binder 133.

The substrate 111 is a support of a current collector and is a site where electrons move in an electrochemical reaction of an active material. The substrate 111 may be a positive electrode substrate or a negative electrode substrate.

The positive electrode substrate may include an aluminium foil, a nickel foil, or a combination thereof as long as the positive electrode substrate has a high conductivity without causing a chemical change in the battery.

The negative electrode substrate may include a copper foil, a nickel foil, a stainless steel foil, a titanium foil, a nickel foam, a copper foam, a polymer substrate coated with a conductive metal, and a combination thereof, as non-limiting examples.

The flame retardant 131 may vaporize when the rechargeable lithium battery is ignited, may suppress an increase in temperature inside the battery, extinguish the battery, and serve to improve battery safety.

The flame retardant 131 may be a compound that retards inflammability. Materials widely known in the art may be used without limitation as long as the materials have an endothermic action within a range of about 80 °C to about 200 °C. The flame retardant 131 may be an organic flame retardant. The organic flame retardant may include a nitrogen-based flame retardant, a phosphorus-based flame retardant, a halogen-based flame retardant, or a combination thereof.

The nitrogen-based flame retardant may be, for example, melamine, a melamine derivative, or a melamine-based copolymer.

For example, the nitrogen-based flame retardant may be melamine, melamine polyphosphate (MPP), melamine cyanurate, or a combination thereof.

Melamine polyphosphate (MPP) is a compound composed of melamine and phosphoric acid. Melamine polyphosphate may be decomposed into thermal decomposition materials and molecular materials when exposed to flame or heat. Then, the molecular materials may be changed to ammonia and water to suppress the flame, and the thermal decomposition materials may suppress the combustion reaction to prevent fire.

The phosphorus-based flame retardant may include ammonium phosphate, ammonium polyphosphate, trioctyl phosphate, dimethyl methyl phosphate, a trimethylolpropane methylphosphonic oligomer, pentaerythritol phosphate, cyclic neopentyl thio phosphoric anhydride, triphenyl phosphate, tricresyl phosphate, tert-butylphenyl diphenyl phosphate, tetraphenyl m-p-phenylene diphosphate, tris(2,4-dibromophenyl) phosphate, N,N'-bis(2-hydroxyethyl) aminomethyl phosphonate, phosphine oxide, phosphine oxide diol, phosphite, phosphonate, triaryl phosphate, alkyldiaryl phosphate, trialkyl phosphate, resorcinol bisdiphenyl phosphate (RDP), or a combination thereof. The alkyl compound may be, for example, C1 to C10 alkyl, and the aryl compound may be, for example, C6 to C30 aryl.

The halogen-based flame retardant may be tribromo phenoxyethane, tetrabromo bisphenol-A (TBBA), octabromo diphenyl ether (OBDPE), brominated epoxy, a brominated polycarbonate oligomer, brominated benzyl alkyl ether, brominated benzoic acid ester, brominated phthalate acid ester, chlorinated paraffin, chlorinated polyethylene, an alicyclic chlorine-based flame retardant, or a combination thereof.

A content of the flame retardant 131 may be about 50 to about 90 wt%, for example, about 70 to about 90 wt%, or about 75 to about 90 wt%, based on a total amount (e.g. 100 wt%) of the functional layer 130. When the content of the flame retardant is less than about 50 wt%, it is difficult to sufficiently improve the safety of the rechargeable lithium battery, and when the content of the flame retardant exceeds about 90 wt%, it may be difficult to improve (i.e. prevent) deterioration of the rechargeable lithium battery.

The conductive material 132 is a material that, when used in combination with a non-conductive flame retardant, enables electronic conduction between the current collector and the electrode active material layer, and consequently serves to prevent deterioration of the rechargeable lithium battery.

Examples of the conductive material 132 may include a carbon-based material such as natural graphite, artificial graphite, carbon black, acetylene black, ketjen black, a carbon fiber, a metal-based material such as a metal powder or a metal fiber of copper, nickel, aluminium, and silver, a conductive polymer such as a polyphenylene derivative, or a mixture thereof, as non-limiting examples.

A content of the conductive material 132 may be greater than about 0 wt% to less than or equal to about 50 wt%, or greater than about 0 wt% to less than or equal to about 30 wt% based on a total amount (e.g. 100wt%) of the functional layer 130.

For example, the content of the conductive material 132 may be about 1 to about 50 wt%, about 1 to about 30 wt%, about 5 to about 30 wt%, or about 5 to about 25 wt% based on the total amount (e.g. 100wt%) of the functional layer 130. If the content of the conductive material is less than about 1 wt%, it may be difficult to improve (*i.e.* prevent) the deterioration of the rechargeable lithium battery because the functional layer does not have conductivity, and if the content of the conductive material exceeds about 50 wt%, it may be difficult to sufficiently improve the safety of the rechargeable lithium battery.

The binder 133 has a role of attaching the flame retardant 131 and the conductive material 132 well to each other in the functional layer 130 and also attaching the current collector 110 to the electrode active material layer 120 well.

The binder 133 may be a water-insoluble binder, a water-soluble binder, or a combination thereof, but is not limited thereto.

The water-insoluble binder may be polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide polytetrafluoroethylene, or a combination thereof, as non-limiting examples.

Examples of the water-soluble binder include a styrene-butadiene rubber, an acrylated styrene-butadiene rubber, an acrylonitrile-butadiene rubber, an acrylic rubber, a butyl rubber, a fluoro rubber, an ethylene propylene copolymer, polyethylene oxide, polyepichlorohydrin, polyphosphazene, polyacrylonitrile, polystyrene, an ethylenepropylenediene copolymer, polyvinylpyridine, chlorosulfonated polyethylene, latex, a polyester resin, an acrylic resin, a phenolic resin, an epoxy resin, polyvinyl alcohol, or a combination thereof, as non-limiting examples.

A content of the binder 133 may range from greater than about 0 wt% to less than or equal to about 50 wt%, or greater than about 0 wt% to less than or equal to about 30 wt%, based on a total amount (*e.g.* 100wt%) of the functional layer 130.

For example, the content of the binder 133 may be about 1 to about 50 wt%, about 1 to about 30 wt%, about 5 to about 30 wt%, or about 5 to about 25 wt% based on the total amount (e.g. 100wt%) of the functional layer 130. When the content of the binder is less than about 1 wt%, adhesion between the current collector and the electrode active material layer may be deteriorated, and when the content of the binder exceeds about 50 wt%, it may be difficult to sufficiently improve the safety of the rechargeable lithium battery.

In an embodiment, a weight ratio of the content of the flame retardant; and a sum of the contents of the conductive material and the binder may range from about 50:50 to about 90:10, or from about 75:25 to about 90:10. When the above range is satisfied, a current collector having excellent safety, no deterioration, and excellent adhesion may be provided.

In an embodiment, the functional layer 130 may have a thickness of about 1 µm to about 5 µm, or, for example, about 1.5 µm to about 3.5 µm, or about 1.5 µm to about 2.5 µm. When the above range is satisfied, safety may be improved while minimizing energy density loss of the rechargeable lithium battery.

For example, a ratio of a thickness of the functional layer; and a thickness of the substrate may be about 1:10 to about 2.5:10. When the thickness ratio is satisfied, energy density loss of the rechargeable lithium battery may be minimized.

### Electrode

Hereinafter, an electrode for a rechargeable lithium battery according to an embodiment will be described with reference to FIG. 1.

In FIG. 1, an electrode according to an embodiment includes a current collector 110; and an electrode active material layer 120 on at least one surface of the current collector, wherein the current collector 110 includes a substrate 111 and a functional layer 130 between the substrate 111 and the electrode active material layer 120, wherein the functional layer 130 includes a flame retardant 131, a conductive material 132, and a binder 133. In other words, the electrode according to an embodiment includes the current collector of the aforementioned embodiment.

In the electrode including the current collector 110 according to an embodiment, since the functional layer 130 having flame retardancy, conductivity, and adherence is introduced between the substrate 111 and the electrode active material layer 120, safety of the rechargeable lithium battery may be improved and deterioration thereof may be prevented.

In addition, adherence between the current collector 110 and the electrode active material layer 120 may be strengthened, and since the functional layer 130 may have a thin thickness compared to the substrate, energy density loss of the battery may be minimized.

Hereinafter, the electrode will be described in detail, except for overlapping descriptions with the above descriptions.

The electrode active material layer 120 may be a positive electrode active material layer or a negative electrode active material layer.

The positive electrode active material layer may include a positive electrode active material, and the negative electrode active material layer may include a negative electrode active material.

The electrode may be a positive electrode 10 or a negative electrode 20.

### Positive Electrode Active Material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

For example, the lithium cobalt-based oxide may be LiCoO₂ (LCO).

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001<b<0.1); LiₐMn_{1-g}G_{g}PO₄ (0.90≤a≤1.8 and 0≤g≤0.5); Li(_{3-f})Fe₂(PO₄)₃ (0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

The positive electrode active material may include, for example, a composite oxide of cobalt, manganese, nickel, aluminium, iron, or a combination thereof and lithium. The positive electrode active material may include, for example, a lithium cobalt composite oxide represented by Chemical Formula 1.

[Chemical Formula 1] Liₐ₁Coₓ₁M¹_{y1}O₂

In Chemical Formula 1, 0.9≤a1≤1.8, 0.3≤x1≤1, 0≤y1≤0.7, and M¹ is selected from Al, B, Ce, Co, Cr, F, Mg, Mn, Mo, Nb, P, S, Si, Sr, Ti, V, W, Zr, and a combination thereof.

In an embodiment, the positive electrode active material may be a nickel (Ni)-based oxide. The nickel-based oxide may include a lithium composite oxide represented by Chemical Formula 2.

[Chemical Formula 2] Liₐ₁₁Niₓ₁₁M¹¹_{y11}M¹²_{1-x11-y11}O₂

In Chemical Formula 2, 0.9≤a11≤1.8, 0.3≤x11≤1, 0≤y11≤0.7, and M¹¹ and M¹² are each independently selected from Al, B, Ce, Co, Cr, F, Mg, Mn, Mo, Nb, P, S, Si, Sr, Ti, V, W, Zr, and a combination thereof. In an embodiment, M¹¹ and M¹² may not be the same.

At least one of the nickel-based positive electrode active materials represented by Chemical Formula 2 may be included.

Specifically, in Chemical Formula 2, for example, 0.4≤x11≤1 and 0≤y11<0.6; or 0.5≤x11≤1 and 0≤y11<0.5; or 0.6≤x11≤1 and 0≤y11<0.4; or 0.7≤x11≤1 and 0≤y11<0.3; 0.8≤x11≤1 and 0≤y11≤0.2; or 0.9≤x11≤1 and 0≤y11≤0.1.

More specifically, the positive electrode active material layer may include a nickel-cobalt-manganese (NCM)-based positive electrode active material, which is a composite oxide of nickel, cobalt, manganese, and lithium. In the NCM-based positive electrode active material, one of M¹¹ and M¹² in Chemical Formula 2 may include Co and the other may include Mn; for example, 0.9≤a11≤1.8, 0.9≤a11≤1.7, 0.9≤a11≤1.6, 0.9≤a11≤1.5, 0.9≤a11≤1.4, 0.9≤a11≤1.3, 0.9≤a11≤1.2, or 0.9≤a11≤1.1; 0.3≤x11≤1, 0.4≤x11≤1, 0.5≤x11≤1, 0.6≤x11≤1, 0.7≤x11≤1, 0.8≤x11≤1, or 0.9≤x11≤1; 0<y11≤0.7, 0≤y11≤0.6, 0≤y11≤0.5, 0≤y11≤0.4, 0≤y11≤0.3, 0≤y11≤0.2, or 0≤y11≤0.1; and 0<(1-x11-y11)≤0.7, 0<(1-x11-y11)≤0.6, 0<(1-x11-y11)≤0.5, 0<(1-x11-y11)≤0.4, 0<(1-x11-y11)≤0.3, 0<(1-x11-y11)≤0.2, or 0<(1-x11-y11)≤0.1.

In addition, the positive electrode active material layer may include an NCA-based positive electrode active material that is a composite oxide of nickel, cobalt, aluminium, and lithium. In the nickel-cobalt-aluminium (NCA)-based positive electrode active material, one of M¹¹ and M¹² in Chemical Formula 2 may include Co and the other may include Al; for example, 0.9≤a11≤1.8, 0.9≤a11≤1.7, 0.9≤a11≤1.6, 0.9≤a11≤1.5, 0.9≤a11≤1.4, 0.9≤a11≤1.3, 0.9≤a11≤12, or 0.9≤a11≤1.1; 0.3≤x11≤1, 0.4≤x11≤1, 0.5≤x11≤1, 0.6≤x11≤1, 0.7≤x11≤1, 0.8≤x11≤1, or 0.9≤x11≤1; 0<y11≤0.7, 0≤y11≤0.6, 0≤y11≤0.5, 0≤y11≤0.4, 0≤y11≤0.3, 0≤y11≤0.2 or 0≤y11≤0.1; and 0<(1-x11-y11)≤0.7, 0<(1-x11-y11)≤0.6, 0<(1-x11-y11)≤0.5, 0<(1-x11-y11)≤0.4, 0<(1-x11-y11)≤0.3, 0<(1-x11-y11)≤0.2, or 0<(1-x11-y11)≤0.1.

In addition, the positive electrode active material layer may include a Ni-Mn-based positive electrode active material that is a composite oxide of nickel, manganese, and lithium. The nickel-manganese (Ni-Mn)-based positive electrode active material is a so-called Co-free positive electrode active material, M¹¹ in Chemical Formula 2 may include Mn; for example, 0.9≤a11≤1.8, 0.9≤a11≤1.7, 0.9≤a11≤1.6, 0.9≤a11≤1.5, 0.9≤a11≤1.4, 0.9≤a11≤1.3, 0.9≤a11≤1.2, or 0.9≤a11≤1.1; 0.3≤x11≤1, 0.4≤x11≤1, 0.5≤x11≤1, 0.6≤x11≤1, 0.7≤x11≤1, 0.8≤x11≤1, or 0.9≤x11≤1; 0<y11≤0.7, 0≤y11<0.6, 0≤y11≤0.5, 0≤y11≤0.4, 0≤y11≤0.3, 0≤y11≤0.2 or 0≤y11≤0.1; and 0 = (1-x11-y11).

The NCM-based positive electrode active material, the NCA-based positive electrode active material, and the Ni-Mn-based positive electrode active material may further include one or more of B, Ce, Cr, F, Mg, Mo, Nb, P, S, Si, Sr, Ti, V, W, and Zr as M¹¹ and M¹² in Chemical Formula 2. The one or more additional element, as a dopant, may partially transform a lattice structure of each positive electrode active material to improve reversible intercalation and deintercalation of lithium.

When the NCM-based positive electrode active material, the NCA-based positive electrode active material, the Ni-Mn-based positive electrode active material, or a combination thereof is used as a positive electrode active material, there may be issues of battery safety due to its low thermal safety, but the battery safety may be sufficiently improved by introducing a current collector including a functional layer according to an embodiment.

In an embodiment, the positive electrode may further include a positive electrode active material used as a sacrificial positive electrode. The positive electrode active material used as the sacrificial positive electrode may be homogeneous or heterogeneous with the aforementioned positive electrode active material.

During the charging process of a rechargeable lithium battery, lithium ions move through an electrolyte from a positive electrode to a negative electrode, are stored between layer structures of a negative electrode active material, and then, during the discharge process, move back from the negative electrode to the positive electrode, wherein since a portion of the lithium ions discharged from the positive electrode remain between the layer structures of the negative electrode active material, 100% of the lithium ions do not return to the positive electrode.

In this way, since the amount of the lithium ions remaining in the negative electrode may reduce capacity, a positive electrode active material additionally added to compensate for this loss is called to be a sacrificial positive electrode.

### Positive Electrode

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material). Since the conductive material and the binder are included in the positive electrode active material layer, which is an example of the electrode active material layer 120, they are distinguished from those included in the aforementioned functional layer 130, but the same types as those included in the functional layer may be used.

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Negative Electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material). Since the conductive material and the binder are included in the negative electrode active material layer, which is an example of the electrode active material layer 120, the binder and/or conductive material are distinguished from the materials included in the aforementioned functional layer 130, but the same types as those included in the functional layer may be used.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material well particles to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

### Rechargeable Lithium Battery

An embodiment provides a rechargeable lithium battery 100 including a positive electrode 10; a negative electrode 20; a separator 30 between the positive electrode and the positive electrode; and an electrolyte solution. The positive electrode, negative electrode, or both of them may be the aforementioned electrode according to the embodiment.

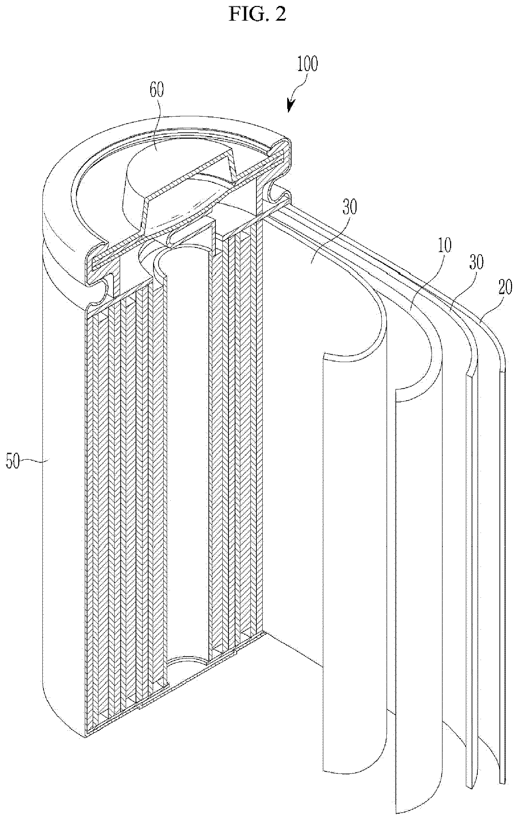

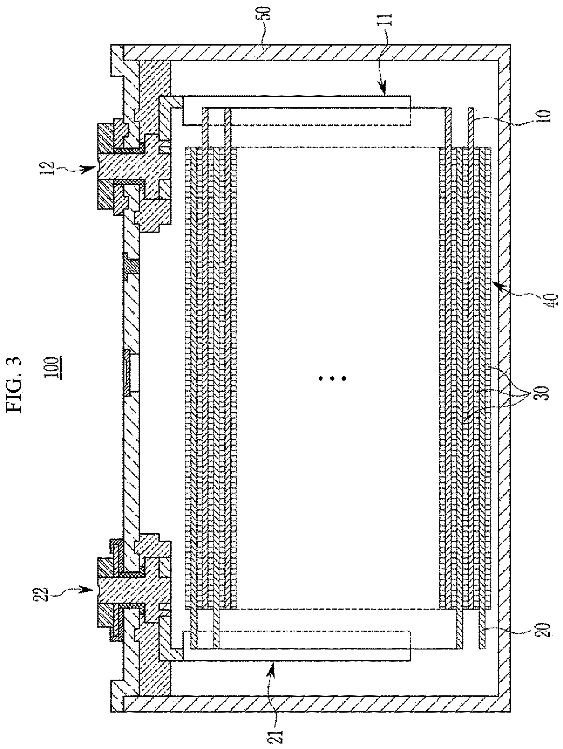

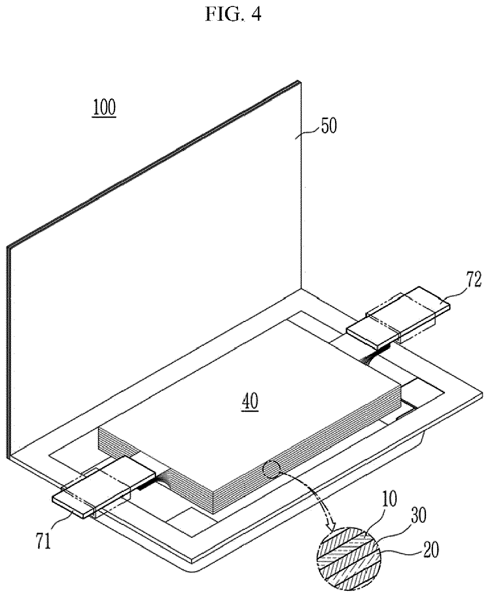

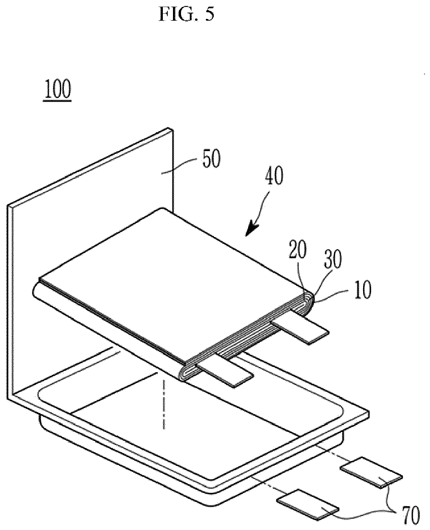

The rechargeable lithium battery may be classified into cylindrical, prismatic, pouch, or coin-type batteries, and the like depending on their shape. FIGS. 2 to 5 are schematic views illustrating a rechargeable lithium battery according to an embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

Since the electrode of the aforementioned embodiment has excellent flame retardancy, conductivity, and adherence, the electrode contributes to improving safety and electrochemical characteristics of the rechargeable lithium battery and minimizing any loss of energy density.

### Electrolyte Solution

The electrolyte solution for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LIN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

### Example 1

### (Example 1-1: Manufacture of Current Collector with Functional Layer)

A functional layer composition including 75 wt% of melamine polyphosphate (MPP) as a flame retardant and 25 wt% of a binder and a conductive material was prepared. The functional layer composition was coated to be 2 µm thick on an aluminium foil (thickness: 10 µm) substrate by using a doctor blade. Subsequently, the coated substrate was completely dried in a 110 °C oven, preparing a current collector having the functional layer on the substrate.

### (Example 1-2: Manufacture of Positive Electrode Including Current Collector with Functional Layer)

Positive electrode active material slurry including 98 wt% of LiCoO₂(LCO) as a positive electrode active material, 1 wt% of a binder, and 1 wt% of a conductive material was prepared. The positive electrode active material slurry was coated on the current collector prepared in Example 1-1, dried, and rolled, obtaining a positive electrode including the current collector and a positive electrode active material layer thereon.

Herein, the positive electrode active material layer had a loading level of 10 mg/cm² and mixture density of 4.1 g/cc.

### (Example 1-3: Manufacturing of Rechargeable Lithium Battery Cell)

The positive electrode according to Example 1-2, a separator with a polyethylene/polypropylene multi-layer structure, and a lithium metal negative electrode were sequentially stacked, and an electrolyte solution prepared by dissolving 1.0 M of a lithium salt LiPF₆ in a solvent prepared by mixing ethylene carbonate and diethyl carbonate in a volume ratio of 50 : 50 was injected thereinto, manufacturing a half cell.

### Examples 2 to 4

Each positive electrode and rechargeable lithium battery cell was manufactured in the same manner as in Example 1 except that a current collector was manufactured by changing the functional layer composition as shown in Table 1.

### Comparative Example 1

A positive electrode and rechargeable lithium battery cell was manufactured in the same manner as in Example 1 except that an aluminium foil itself was used as a current collector including no separate functional layer.

### Comparative Example 2

A positive electrode and rechargeable lithium battery cell was manufactured in the same manner as in Example 1 except that an aluminium foil itself was used as a current collector, and positive electrode active material slurry including 98 wt% of LiCoO₂(LCO) as a positive electrode active material and 2 wt% of the functional layer composition according to Example 1-1 was prepared.

As can be seen above, Comparative Example 2 is different from Example 1 in that the functional layer composition was not coated onto a substrate to form a separate functional layer but instead was included in a positive electrode active material layer to manufacture the positive electrode.

**(Table 1)**

| | Composition of functional layer (wt%) | | Presence or absence of functional layer |
|---|---|---|---|
| | Flame retardant (MPP) | Binder+Conductive material | |
| Comparative Example 1 | - | - | X |
| Comparative Example 2 | 75 | 25 | X (including the functional layer composition in the positive electrode active material layer) |
| Example 1 | 75 | 25 | O |
| Example 2 | 80 | 20 | O |
| Example 3 | 90 | 10 | O |
| Example 4 | 50 | 50 | O |

### Experimental Example 1: Analysis of Fire Extinguishing Characteristics after Ignition of Positive Electrode

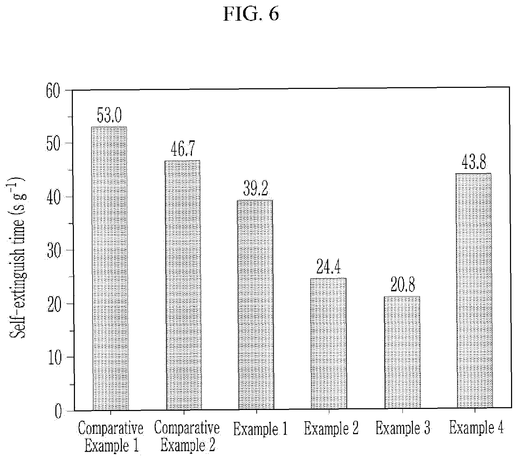

After immersing each of the positive electrodes according to the examples and the comparative examples in an electrolyte solution, the positive electrodes were ignited with a torch, and then, the amount of time taken until the resulting fire was extinguished was measured as a self-extinguishing time (second (s)/g) per weight (g) of the electrolyte solution. The results are shown as a graph in FIG. 6. FIG. 6 is a graph showing the self-extinguishing time (SET) of the positive electrodes of Examples 1 to 4 and Comparative Examples 1 and 2.

Referring to FIG. 6, the positive electrodes of Examples 1 to 4 exhibited more excellent self-extinguishing properties after the ignition than exhibited by the positive electrodes of Comparative Examples 1 and 2.

### Experimental Example 2: Analysis of Half-cell Charge/discharge Profile (voltage profile)

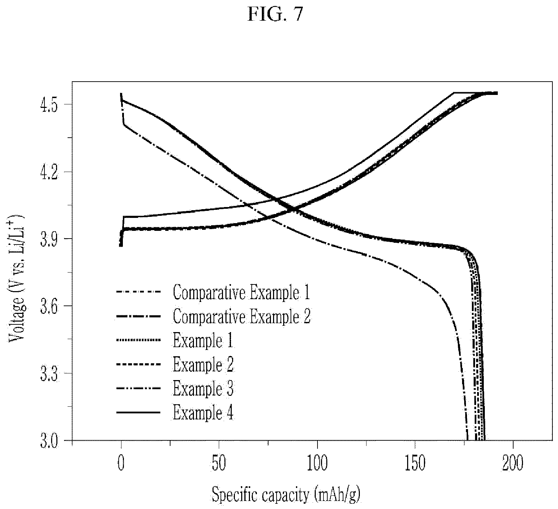

The rechargeable lithium battery cells (half cells) according to Examples 1 to 4 and Comparative Examples 1 and 2 were charged/discharged under a charge condition (constant current/constant voltage of 1 C/4.55 V, cut-off current of 0.025 C, pause of 10 minutes) and a discharge condition (constant current of 1 C, cut-off voltage of 3.0 V, pause of 10 minutes) to measure charge/discharge profiles, and the results are shown in FIG. 7. FIG. 7 is a graph showing the charge/discharge profiles of the rechargeable lithium battery cells of Examples 1 to 4 and Comparative Examples 1 and 2.

Referring to FIG. 7, the rechargeable lithium battery cells of Examples 1 to 4 exhibit not much deteriorated discharge capacities, compared with the rechargeable lithium battery cells of Comparative Examples 1 and 2.

Example embodiments have been disclosed herein, and although specific terms are employed, they are used and are to be interpreted in a generic and descriptive sense only and not for purpose of limitation. In some instances, as would be apparent to one of ordinary skill in the art as of the filing date of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### <Description of Symbols>

| | | | |
|---|---|---|---|
| 110: | current collector | 111: | substrate |
| 120: | electrode active material layer | 130: | functional layer |
| 131: | flame retardant | 132: | conductive material |
| 133: | binder | | |
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A current collector for a rechargeable lithium battery, comprising:
a substrate; and
a functional layer on the substrate,
wherein the functional layer includes a flame retardant, a conductive material, and a binder.

2. The current collector of claim 1, wherein:
the flame retardant includes a nitrogen-based flame retardant, a phosphorus-based flame retardant, a halogen-based flame retardant, or a combination thereof.

3. The current collector of claim 2, wherein:
the nitrogen-based flame retardant includes melamine, melamine polyphosphate (MPP), melamine cyanurate, a melamine-based copolymer, or a combination thereof.

4. The current collector of any one of claims 1 to 3, wherein:
the flame retardant is included in an amount of about 50 to about 90 wt% based on a total amount of the functional layer.

5. The current collector of any one of claims 1 to 4, wherein:
the conductive material is included in an amount of greater than about 0 wt% and less than or equal to about 30 wt%.

6. The current collector of any one of claims 1 to 5, wherein:
the binder is included in an amount of greater than about 0 wt% and less than or equal to about 30 wt%.

7. The current collector of any one of claims 1 to 6, wherein:
a weight ratio of a content of the flame retardant; and a sum of the contents of the conductive material and the binder is about 50:50 to about 90:10.

8. The current collector of any one of claims 1 to 7, wherein:
the functional layer has a thickness of about 1 µm to about 5 µm.

9. The current collector of any one of claims 1 to 8, wherein:
a ratio of a thickness of the functional layer; and a thickness of the substrate is about 1:10 to about 2.5:10.

10. An electrode comprising:
a current collector, and
an electrode active material layer on at least one surface of the current collector; and
wherein:
the current collector includes a substrate and a functional layer between the substrate and the electrode active material layer, and
the functional layer includes a flame retardant, a conductive material, and a binder.

11. The electrode of claim 10, wherein:
the electrode active material layer is a positive electrode active material layer, and
the positive electrode active material layer includes a nickel-cobalt-manganese (NCM)-based composite oxide, a nickel-cobalt-aluminium (NCA)-based composite oxide, a nickel-manganese (Ni-Mn)-based composite oxide, or a combination thereof.

12. The electrode of claim 10 or claim 11, wherein:
the flame retardant includes a nitrogen-based flame retardant, a phosphorus-based flame retardant, a halogen-based flame retardant, or a combination thereof.

13. The electrode of claim 12, wherein the nitrogen-based flame retardant includes melamine, melamine polyphosphate (MPP), melamine cyanurate, a melamine-based copolymer, or a combination thereof.

14. The electrode of any one of claims 10 to 13, wherein:
(i) the flame retardant is included in an amount of about 50 to about 90 wt% based on a total amount of the functional layer; and/or
(ii) the conductive material is included in an amount of greater than about 0 wt% and less than or equal to about 30 wt%; and/or
(iii) the binder is included in an amount of greater than about 0 wt% and less than or equal to about 30 wt%; and/or
(iv) a weight ratio of a content of the flame retardant; and a sum of the contents of the conductive material and the binder is about 50:50 to about 90: 10; and/or
(v) the functional layer has a thickness of about 1 µm to about 5 µm; and/or
(vi) a ratio of a thickness of the functional layer; and a thickness of the substrate is about 1:10 to about 2.5:10.

15. A rechargeable lithium battery, comprising:
a positive electrode;
a negative electrode;
a separator between the positive electrode and the negative electrode, and
an electrolyte solution, wherein the positive electrode, the negative electrode, or both of the positive electrode and the negative electrode are the electrode of any one of claims 10 to 14.
